# EUROPÄISCHE PATENTSCHRIFT

(11) **EP 1 419 050 B1**
(45) Veröffentlichungstag und Bekanntmachung des Hinweises auf die Patenterteilung: **04.07.2007**
(21) Anmeldenummer: 02738130.0
(22) Anmeldetag: 31.05.2002
(51) Int. Cl.: B32B 27/00

(54) **BIAXIAL ORIENTIERTE FOLIE MIT EINER SCHICHT AUS FLÜSSIGKRISTALLINEN POLYMEREN**
BIAXIALLY ORIENTED FILM COMPRISING A LAYER OF LIQUID CRYSTALLINE POLYMERS
FILM A ORIENTATION BIAXIALE PRESENTANT UNE COUCHE DE POLYMERES CRISTALLINES LIQUIDES

(30) Priorität: 01.06.2001 DE 10126897
(43) Veröffentlichungstag der Anmeldung: 19.05.2004
(73) Patentinhaber: Treofan Germany GmbH & Co.KG, 66539 Neunkirchen (DE)
(72) Erfinder: BUSCH, Detlef, 66740 Saarlouis (DE); PETERS, Christian, 66386 St. Ingbert (DE); GROH-RUBECK, Susanne, 65817 Eppstein (DE)
(86) Internationale Anmeldenummer: PCT/EP2002/005945
(87) Internationale Veröffentlichungsnummer: WO 2002/098655

(56) Entgegenhaltungen:
- EP-A- 0 503 063
- EP-A- 0 911 150
- EP-A- 0 911 151

## Beschreibung

Die Erfindung betrifft eine mehrschichtige Folie mit mindestens einer Schicht aus einem flüssigkristallinen Polymeren.

Im Stand der Technik sind mehrschichtige Folien mit Schichten aus flüssigkristallinen Polymeren bekannt. EP 0 503 063 beschreibt ein Laminat aus einer Flüssigkristall Polymer Schicht und einer Polymer Haftschicht auf mindestens einer Oberfläche der LCP Schicht. Die Polymerhaftschicht ist aus einem modifizierten Polyolefin mit mindestens einer funktionellen Gruppe, wie beispielsweise Carbonsäuregruppe, Carbonsäureanhydridgruppe, einer Glycidgruppe oder Alkoxysilangruppe ausgewählt. Die Haftschicht kann auch aus einem Polyester bestehen.

EP 0 911 148 beschreibt eine Laminat aus einer LCP Schicht und einer Polyethylenfolie. Die beiden Schichten werden mittels einer Haftschicht mit einander verbunden. Das Laminat kann mittels Coextrusion hergestellt werden, in dem die Schichten aus LCP, Polyethylen und Haftvermittler gemeinsam und gleichzeitig durch eine Düse coextrudiert werden.

Im Stand der Technik sind biaxial orientierte Polypropylenfolien bekannt. Diese Folien finden in den verschiedenstes Bereichen, wie beispielsweise Lebensmittelverpackung, Zigaretteneinschlag, Kaschierfolie sowie technische Anwendungen Verwendung. Die Polypropylenfolie erhält viele wichtige Gebrauchseigenschaften durch die Orientierung in und senkrecht zur Maschinenlaufrichtung, die sogenannte biaxiale Orientierung.

Insbesondere die Barriereeigenschaften der , biaxial orientierten Polypropylenfolien sind verbesserungsbedürftig. Die Auswahl der Materialien die sich mit dem Polypropylen kombinieren lassen sind jedoch beschränkt.

Daher werden für viele Anwendungen die Folien nach der Herstellung der eigentlichen boPP-Folie in einem zusätzlichen Verarbeitungsschritt beschichtet. Hier kommen Acrylatbeschichtungen, PVDC , PVOH und andere zum Einsatz.

EP 0 911 150 beschreibt mehrschichtige Laminate mit mindestens einer Schicht aus einem aromatischen amorphen flüssigkristallinem Polyester und einer weiteren Schicht aus einem thermoplastischen Polymeren, welches kein Polyester ist. Es ist beschrieben, daß das Laminat durch Coextrusion hergestellt werden kann. Eine Verstreckung ist unterhalb der Schmelzetemperatur des flüssigkristallinen Polyesters möglich, ohne daß es zu Rissen oder Brüchen kommt. Aus den Laminaten können Behälter für Nahrungsmittel oder Getränke hergestellt werden.

Die Aufgabe der vorliegenden Erfindung bestand darin, eine Folie zur Verfügung zu stellen, welche sich auf den herkömmlichen Stenteranlagen über den Prozeß der biaxialen Orientierung herstellen läßt und die ein günstiges Eigenschaftsprofil aufweist. Hierbei sollen vor allen die guten Gebrauchseigenschaften der bekannten biaxial orientierten Polypropylenfolien erhalten bleiben. Zusätzlich sind gute Barriereeigenschaften gegenüber Sauerstoff, Wasser und Aromastoffen besonders wünschenswert.

Diese Aufgabe wird gelöst durch Verfahren zur Herstellung einer mehrschichtigen, biaxial orientierten coextrudierten Polyolefinfolie, welche mindestens fünf Schichten umfaßt, wobei die den einzelnen Schichten der Folie entsprechenden Schmelzen durch eine Flachdüse coextrudiert, die so erhaltene mehrschichtige Folie zur Verfestigung auf einer oder mehreren Walze/n abgezogen und abgekühlt wird und die Folie anschließend gestreckt (orientiert), die gestreckte Folie thermofixiert und aufgewickelt wird, wobei die Folie eine zentrale Schicht aus einem flüssigkristallinen Polymeren (LCP) und beidseitig auf jeder Oberfläche der LCP-Schicht je eine Haftvermittlerschicht und auf den Oberflächen der jeweiligen Haftvermittlerschicht eine Kraftschicht aus einem teilkristallinen thermoplastischen Polymeren aufweist, wobei die Haftvermittlerschicht aus einem modifizierten Co- und/oder Terpolymeren aufgebaut ist, welches aus Olefin und ungesättigter Carbonsäure oder deren Estern aufgebaut ist und die LCP-Schicht der biaxial verstreckten Folie eine Dicke von höchstens 10 µm aufweist und die den einzelnen Schichten der Folien entsprechenden Schmelzen vor der Abkühlung für eine Dauer von mindestens 6 sec in geschmolzenem Zustand aufeinanderliegen. Die abhängigen Unteransprüche geben bevorzugte Ausführungsformen der Erfindung an.

Im Rahmen der vorliegenden Erfindung wurde überraschenderweise gefunden, daß der mehrschichtige coextrudierte Verbund aus einer zentralen LCP Schicht mit beidseitigen Haftvermittlerschichten und Schichten aus einem teilkristallinen thermoplastischen Polymeren (Kraftschichten) in Längs- und Querrichtung orientiert werden kann.

Die zentrale LCP-Schicht enthält mindesten 50 Gew.-%, vorzugsweise 70 bis 100 Gew.-%, insbesondere 80 bis <100 Gew.-% eines nachstehend beschriebenen flüssigkristallinen Polymeren (LCP).

LCP sind im Stand der Technik bekannt und zeichnen sich dadurch aus, daß sie in der Schmelze die Eigenschaften von flüssigen Kristallen zeigen. Oberhalb ihres Fließtemperaturbereichs liegen sie in einer sogenannten flüssigkristalline Phase vor, in welcher eine höhere Orientierung/Ordnung der Polymerketten vorliegt als bei den Polymerschmelzen aus thermoplastischen Polymeren. Derartige LCPs sind beispielsweise unter dem Handelnamen Vectra bekannt.

Für die Zwecke der vorliegenden Erfindung sind als LCP Polyester oder Polyamide geeignet, welche aus den aromatischen Einheiten wie z.B. 1,4-Phenylen, 1,3-Phenylen, 4,4-Phenylen, 2,6-Naphtylen, 2,7-Naphtylen aufgebaut sind. Gegebenenfalls können die LCP-Ketten auch Ethylenglycol-Einheiten aufweisen. Bevorzugt sind LCP welche aus aromatischen Einheiten aufgebaut sind.

Im allgemeinen sind geeignete LCP aus einem oder mehreren der folgenden Monomeren, bzw. den entsprechenden Einheiten aufgebaut, vorzugsweise aus mindestens zwei dieser Monomereinheiten: Terephtalsäure, Isophtalsäure, 1,4-Hydrochinon, Resorcinol, 4-Amino-Benzoesäure, 4-Hydroxy-Benzoesäure, 4-Aminophenol, 1,4-Phenylendiamin, 4,4-Biphenol, 4,4-Biphenyldicarbonsäure, 6-Hydroxy2-Naphtoesäure, 2,6-Dihydroxynaphtol, 2,6-Di-Naphtoesäure. Unter diesen Monomeren sind 6-Hydroxy2-Naphtoesäure (HNA) und 4-Hydroxy-Benzoesäure (HBA), 4,4-Biphenol (BP) und Terephtalsäure (TA) bevorzugt.

Derartige LCP an sich und Verfahren zu ihrer Herstellung sind im Stand der Technik bekannt und beispielsweise beschrieben in US Patent 4,473,682, US Patent 5,204,443 US Patent 5,656,714US Patent 5,227,456 auf welche hiermit ausdrücklich Bezug genommen wird.

Bevorzugt sind LCP nur aus HBA und HNA Einheiten aufgebaut sind, wobei der Anteil an HBA zu HNA im Bereich von 60:40 bis 80:20, vorzugsweise etwa 70:30 liegt.

Die Dicke der LCP-Schicht beträgt im allgemeinen 1 bis 10µm, vorzugsweise 2 bis 8µm, insbesondere 3 bis 6 µm. Es wurde gefunden, daß die Haftfestigkeiten der Schichten aufeinander kritisch von der Dicke der LCP Schicht abhängt. Es ist wesentlich, daß die Dicke der LCP-Schicht 10µm nicht überschreitet. Mit dickeren Schichten kommt es bereits unmittelbar nach der Extrusion auf der Abkühlwalze zur Delaminierung der coextrudierten Schichten. Eine Verstreckung dieses Schichtaufbaus ist nicht möglich.

Die Haftschicht wird zwischen der LCP-Schicht und der Kraftschicht angebracht, d.h. sie ist auf der Oberfläche der LCP-Schicht aufgebracht. Die Haftschicht sorgt dafür, daß die LCP-Schicht und die Kraftschicht so fest miteinander verbunden sind, daß die über die Kraftschicht aufgenommenen Streckkräfte derart bis zur LCP Schicht übertragen werden, daß eine Orientierung dieser LCP-Schicht erfolgt und daß dabei die Verbundfestigkeit der einzelnen Schichten miteinander erhalten bleibt. Die Haftschicht ist vorzugsweise aus modifizierten polyolefinischen Co-und/oder Terpolymeren I aufgebaut.

Diese modifizierten Co- oder Terpolymere I sind aus einem Olefin und einer ungesättigten Carbonsäuren oder deren Ester oder deren Anhydride aufgebaut. Im allgemeinen enthält die Haftschicht mindestens 90 Gew.-%, vorzugsweise 95 bis 100 Gew.-%, insbesondere 99 bis <100 Gew.-% des modifizierten Co- oder Terpolymeren 1 jeweils bezogen auf das Gewicht der Haftschicht.

Geeignete modifizierte Co- oder Terpolymere I sind aus Olefinen und ungesättigten Carbonsäuren oder deren Ester oder deren Anhydride als Monomere aufgebaut. Olefine sind beispielsweise Ethylen, Propylen oder Buten-1, ggf. auch höhere Homologe wie z.B. Hexen oder Octen. Ungesättigte Carbonsäuren umfassen ungesättigte Mono- und Dicarbonsäuren sowie deren Ester oder Anhydride. Als ungesättigte Carbonsäuren sind Acrylsäure oder Methacrylsäure sowie deren Ester bevorzugt. Grundsätzlich kann das modifizierte Co- oder Terpolymere I aus verschiedenen Olefinen und verschiedenen ungesättigten Carbonsäuren oder deren Ester/Anhydriden, aufgebaut sein. Besonders vorteilhaft sind Copolymere I aus Ethylen und Acrylsäureester.

Terpolymere I sind im allgemeinen aus drei verschiedenen Monomeren (a), (b) und (c) aufgebaut. Zu den Monomeren (a) gehören die vorstehend genannten Olefine, die Monomere (b) sind ungesättigte Carbonsäuren oder deren Ester, Monomere (c) sind von (b) verschiedene Carbonsäureester oder Carbonsäureanhydride. Als Monomer (c) sind ungesättigte Monocarbonsäureester, beispielsweise Glycidylmethacrylat, oder ungesättigte Dicarbonsäuren oder deren Anhydrid, wie beispielsweise Maleinsäure oder Maleinsäureanhydrid bevorzugt. Besonders vorteilhaft sind Terpolymere aus (a) Ethylen, (b) Acrylsäure oder Methacrylsäure oder deren Ester und (c) Glycidylmethacrylat oder Maleinsäureanhydrid.

Die Ester der beschriebenen ungesättigten Carbonsäuren leiten sich von einem oder mehreren niederen Alkoholen ab. Geeignet sind beispielsweise Methyl-, Ethyl-, n-Propyl-, i-Propyl-, n-Butyl-, i-Butyl-, sec-Butyl- oder tert.-Butyl-Ester.

Die Zusammensetzung der modifizierten Co- oder Terpolymeren I aus den jeweiligen Monomeren kann innerhalb der nachstehend beschriebenen Grenzen variieren. Copolymere I enthalten im allgemeinen mindestens 60 Gew.-%, vorzugsweise 70 bis 97 Gew.-% Olefin, vorzugsweise Ethylen und höchstens 40 Gew.-%, vorzugsweise 3 bis 30 Gew.-% ungesättigte Carbonsäuren oder deren Estern, vorzugsweise Acrylsäure oder Methacrylsäure oder deren Ester.

Terpolymere I enthalten im allgemeinen
(a) 65 bis 96 Gew.-%, vorzugsweise 72 bis 93 Gew.-% Olefin, vorzugsweise Ethylen und
(b) 3 bis 34 Gew.-%, vorzugsweise 5 bis 26 Gew.-% ungesättigte Carbonsäuren oder deren Estern, vorzugsweise Acrylsäure oder Methacrylsäure oder deren Ester und
(c) 1 bis 10 Gew.-%, vorzugsweise 2 bis 8 Gew.-% von (b) verschiedene ungesättigte Mono- oder Dicarbonsäuren oder deren Ester oder deren Anhydrid, vorzugsweise Maleinsäureanhydrid oder Glycidylmethacrylat.

Die vorstehend beschriebenen modifizierten Co- oder Terpolymeren I der Haftschicht haben im allgemeinen einen Schmelzpunkt von 40 bis 120°C, vorzugsweise 60 bis 100°C. Der Vicatpunkt (nach DIN 53460) liegt vorzugsweise im Bereich von 30 bis 90°C. Der Schmelzindex beträgt im allgemeinen 0,1 bis 20 g/10min (190°C, 21,6N), vorzugsweise 0,1 bis 15 g/10min.

Die Dicke der Haftschicht beträgt im allgemeinen 0,4 bis 4µm, vorzugsweise 0,4 bis 2µm, insbesondere 0,4 bis 0,8 µm.

Zur Orientierung einer Folie ist es notwendig, daß die über Walzen oder einen Streckrahmen oder andere geeignete Mittel in die Folie eingebrachten Streckkräfte auf alle Schichten der Folie einwirken. Es wurde gefunden, daß zur Übertragung der Streckkräfte auch auf die Schicht aus LCP eine Schicht aus einem teilkristallinen Polyolefin in dem mehrschichtigen Aufbau enthalten sein muß. Es wurde gefunden, daß durch diesen Aufbau der gesamte Verbund, einschließlich der LCP-Schicht, in Längs- und Querrichtung verstreckt werden kann. Diese Schicht, welche zur Übertragung der Streckkräfte beiträgt wird daher nachstehend Kraftschicht genannt. Diese Kraftschicht muß zum einen eine genügend große Haftfestigkeit gegenüber der Haftschicht aufweisen. Die zweite wichtige Funktion ist die Übertragung der Streckkräfte auf die übrigen Schichten, insbesondere die Übertragung der Streckkräfte auf die LCP-Schicht.

Diese Funktionen werden nur erfüllt, wenn das Polymere dieser Kraftschicht ein teilkristallines Polyolefin ist. Die Kristallinität des Polymeren beträgt daher erfindungsgemäß mindestens 10 bis 70%, vorzugsweise 30 bis 70%. Bevorzugt wird als Polymeres der Kraftschicht ein Propylenhomopolymer eingesetzt. Besonders geeignet sind isotaktische Propylenhomopolymere mit einem Schmelzpunkt von 140 bis 170 °C, vorzugsweise von 155 bis 165 °C, und einen Schmelzflußindex (Messung DIN 53 735 bei 21,6 N Belastung und 230 °C) von 1,0 bis 15 g/10 min, vorzugsweise von 1,5 bis 8 g/10 min. Der n-heptanlösliche Anteil des isotaktischen Propylenhomopolymeren beträgt im allgemeinen 1 bis 10 Gew.-%, vorzugsweise 2 bis 5 Gew.-% bezogen auf das Ausgangspolymere. Die Kristallinität des Propylenhomopolymeren beträgt vorzugsweise 40 bis 70%, insbesondere 50 bis 70%. Die Molekulargewichtsverteilung des Homopolymeren kann variieren. Das Verhältnis des Gewichtsmittels M_{w} zum Zahlenmittel Mₙ liegt im allgemeinen zwischen 1 und 15, vorzugsweise bei 2 bis 10, ganz besonders bevorzugt bei 2 bis 6. Eine derartig enge Molekulargewichtsverteilung des Propylenhomopolymeren erreicht man beispielsweise durch dessen peroxidischen Abbau oder durch Herstellung des Polypropylens mittels geeigneter Metallocenkatalysatoren.

Es ist bevorzugt, daß die Schichtdicke der Kraftschicht 5 bis 15µm, vorzugsweise 6 bis 10µm beträgt. Es wurde gefunden, daß bei Schichtdicken von unter 5 µm die Kraftübertragung unzureichend wird und der Verbund nur noch schlecht biaxial orientiert werden kann. Bei Schichtdicken von über 15 µm wird die Gesamtdicke der Folie ungünstig, wenngleich für manche Anwendungen die Gesamtdicke der Folie keiner oberen Grenze unterliegt.

In einer weiteren Ausführungsform kann die Kraftschicht eine opake Schicht sein, wie sie bei bekannten opaken Folien als opake Basisschicht vorliegt. In dieser Ausführungsformen ist die Kraftschicht durch Zusatz von Füllstoffen opak. Im allgemeinen enthält die Kraftschicht in dieser Ausführungsform mindestens 70 Gew.-%, vorzugsweise 75 bis 99 Gew.-%, insbesondere 80 bis 98 Gew.-%, jeweils bezogen auf das Gewicht der Basisschicht, der vorstehend beschriebenen teilkristallinen Polyolefine bzw. Propylenpolymeren, wobei ebenfalls die beschriebenen Propylenhomopolymere bevorzugt sind.

Die opake Kraftschicht enthält zusätzlich Füllstoffe in einer Menge von maximal 30 Gew.-%, vorzugsweise 1 bis 25 Gew.-%, insbesondere 2 bis 20 Gew.-%, bezogen auf das Gewicht der Kraftschicht. Füllstoffe sind im Sinne der vorliegenden Erfindung Pigmente und/oder vakuoleniniziierende Teilchen.

Pigmente sind im Sinne der vorliegenden Erfindung unverträgliche Teilchen, die im wesentlichen nicht zur Vakuolenbildung beim Verstrecken der Folie führen. Die färbende Wirkung der Pigmente wird durch die Teilchen selbst verursacht. "Pigmente" haben im allgemeinen einen mittleren Teilchendurchmesser von 0,01 bis maximal 1 µm, vorzugsweise 0,01 bis 0,7 µm , insbesondere 0,01 bis 0,4 µm. Pigmente umfassen sowohl sogenannte "Weißpigmente", welche die Folien weiß einfärben, als auch "Buntpigmente", welche der Folie eine bunte oder schwarze Farbe verleihen. Übliche Pigmente sind Materialien wie z.B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden.

Die Titandioxidteilchen bestehen im allgemeinen zu mindestens 95 Gew.-% aus Rutil und werden bevorzugt mit einem Überzug aus anorganischen Oxiden und/oder aus organische Verbindungen mit polaren und unpolaren Gruppen eingesetzt. Derartige Beschichtungen des TiO2 sind im Stand der Technik bekannt.

Im Sinne der vorliegenden Erfindung sind "vakuoleniniziierende Füllstoffe" feste Teilchen die mit der Polymermatrix unverträglich sind und beim Verstrecken in der Polypropylenschicht zur Bildung von vakuolenartigen Hohlräumen führen, wobei Größe, Art und Anzahl der Vakuolen von der Größe und der Menge der festen Teilchen und den Streckbedingungen wie Streckverhältnis und Strecktemperatur abhängig sind. Die Vakuolen reduzieren die Dichte und geben den Folien ein charakteristisches perlmuttartiges, opakes Aussehen, welches durch Lichtstreuung an den Grenzflächen "Vakuole/Polymermatrix" entsteht. Die Lichtstreuung an den festen Teilchen selbst trägt zur Opazität der Folie im allgemeinen vergleichsweise wenig bei. In der Regel haben die vakuoleniniziierenden Füllstoffe eine Mindestgröße von 1 µm, um zu einer effektiven, d.h. opak machenden Menge an Vakuolen zu führen. Im allgemeinen beträgt der mittlere Teilchendurchmesser der Teilchen 1 bis 6 µm, vorzugsweise 1,5 bis 5 µm. Der chemische Charakter der Teilchen spielt eine untergeordnete Rolle, sofern Unverträglichkeit vorliegt.

Übliche vakuoleniniziierende Füllstoffe sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum) und Siliciumdioxid, worunter Calciumcarbonat und Siliciumdioxid bevorzugt eingesetzt werden. Als organische Füllstoffe kommen die üblicherweise verwendeten, mit dem Polymeren der Basisschicht unverträglichen Polymeren in Frage, insbesondere solche wie HDPE, Copolymere von cyclischen Olefinen wie Norbornen oder Tetracyclododecen mit Ethylen oder Propen, Polyester, Polystyrole, Polyamide, halogenierte organische Polymere, wobei Polyester wie beispielsweise Polybutylenterephthalate bevorzugt sind. "Unverträgliche Materialien bzw. unverträgliche Polymere" im Sinne der vorliegenden Erfindung bedeutet, daß das Material bzw. das Polymere in der Folie als separates Teilchen bzw. als separate Phase vorliegt.

Die opake Kraftschicht enthält Pigmente im allgemeinen in einer Menge von 0,5 bis 10 Gew.-%, vorzugsweise 1 bis 8 Gew.%, insbesondere 1 bis 5 Gew.-%. Vakuoleniniziierende Füllstoffe sind im allgemeinen in einer Menge von 0,5 bis 30 Gew.%, vorzugsweise 1 bis 15 Gew.-%, insbesondere 1 bis 10 Gew.-% enthalten. Die Angaben beziehen sich auf das Gewicht der Kraftschicht.

Die Dichte der Folie kann je nach Zusammensetzung der Kraftschicht in einem Bereich von 0,4 bis 1,1 g/cm³ variieren. Dabei tragen Vakuolen zu einer Erniedrigung der Dichte bei, wohingegen Pigmente, wie z.B. TiO₂ auf Grund ihres höheren spezifischen Gewichts die Dichte der Folie erhöhen. Vorzugsweise beträgt die Dichte der opaken Ausführungsformen 0,5 bis 0,95 g/cm³.

Es wurde gefunden, daß auch opake Schichten, insbesondere auch solche mit vakuolenhaltiger Struktur als Schicht zur Übertragung der Streckkräfte und damit zur Herstellung eines verstreckten verbundesgeeignet sind. Auch für solche Ausführungsformen liegt die Schichtdicke der Kraftschicht bevorzugt im Bereich von 5 bis 15 µm.

In einer bevorzugten Ausführungsform weißt die erfindungsgemäße Folie zusätzlich zu dem Aufbau aus LCP-Schicht, Haftschichten und Kraftschichten mindestens eine, vorzugsweise beidseitig Deckschichten auf, welche auf der oder den Oberflächen der Kraftschichten aufgebracht ist/sind. Diese polyolefinischen Deckschichten sind die außenliegenden Schichten der mehrschichtigen Folien und bestimmten Funktionalitäten wie Siegelfähigkeit, Glanz, Reibung und andere Eigenschaften der Folie, die von den außenliegenden Schichten abhängen. Die Deckschichten sind im allgemeinen aus Polymeren aus Olefinen mit 2 bis 10 Kohlenstoffatomen aufgebaut. Die Deckschichten enthalten im allgemeinen 95 bis 100 Gew.-% eines Polyolefins, vorzugsweise 98 bis <100 Gew.-% Polyolefin, bezogen auf das Gewicht der jeweiligen Deckschicht.

Beispiele für geeignete olefinische Polymere der Deckschichten sind Polyethylene, Polypropylene, Polybutylene, oder Mischpolymerisate aus Olefinen mit zwei bis acht C-Atomen, worunter Co- oder Terpolymere aus Ethylen- Propylen und/oder Butyleneinheiten oder Mischungen aus den genannten Polymeren bevorzugt sind. Diese olefinischen Polymeren enthalten keine funktionellen Gruppen und sind nur aus olefinischen Monomeren aufgebaut. Bevorzugte Mischpolymerisate sind
- statistische Ethylen-Propylen-Copolymere, vorzugsweise mit einem Ethylengehalt von 1 bis 10 Gew.%, insbesondere 2,5 bis 8 Gew.-%, oder
- statistische Propylen-Butylen-1-Copolymere, vorzugsweise mit einem Butylengehalt von 2 bis 25 Gew.-%, bevorzugt 4 bis 20 Gew.-%, oder
- statistische Ethylen-Propylen-Butylen-1-Terpolymere, vorzugsweise mit einem Ethylengehalt von 1 bis 10 Gew.-% und einem Butylen-1-Gehalt von 2 bis 20 Gew.-%, oder
- eine Mischung oder ein Blend aus Ethylen-Propylen-Butylen-1-Terpolymeren und Propylen-Butylen-1-Copolymeren mit einem Ethylengehalt von 0,1 bis 7 Gew.-% und einem Propylengehalt von 50 bis 90 Gew.-% und einem Butylen-1-Gehalt von 10 bis 40 Gew.-%.

Die Angaben in Gew.-% beziehen sich jeweils auf das Gewicht des Co- oder Terpolymeren. Die in den Deckschichten eingesetzten vorstehend beschriebenen Co- und/oder Terpolymeren, die nur aus Olefinen aufgebaut sind, weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140 °C. Das vorstehend beschriebene Blend aus Co- und Terpolymeren hat einen Schmelzflußindex von 5 bis 9 g/10 min und einen Schmelzpunkt von 120 bis 150°C. Alle vorstehend angegebenen Schmelzflußindices werden bei 230 °C und einer Kraft von 21,6 N (DIN 53 735) gemessen. Gegebenenfalls können alle vorstehend beschriebenen Deckschichtpolymeren peroxidisch abgebaut sein, wobei der Abbaufaktor im allgemeinen in einem Bereich von 1 bis 15, vorzugsweise 1 bis 8 liegt

Geeignete Polyethylene für die Deckschichten sind HDPE, MDPE, LDPE wie sie üblicherweise in biaxial orientierten Verpackungsfolien eingesetzt werden.

Die Dicke der jeweiligen Deckschicht ist im allgemeinen größer als 1,0 µm und liegt vorzugsweise im Bereich von 1,5 bis 10 µm, insbesondere 2 bis 8 µm.

Die Deckschichten und oder die Kraftschichten können zusätzlich Additive wie Neutralisationsmittel, Stabilisatoren, Antistatika, Antiblockmittel und/oder Gleitmittel in jeweils wirksamen Mengen enthalten. Die nachstehenden Angaben in Gew.-% beziehen sich jeweils auf das Gewicht der jeweiligen Deckschicht.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen oder vernetzte Polymere wie vernetztes Polymethylmethacrylat oder vernetzte Siliconöle. Siliciumdioxid und Calciumcarbonat sind bevorzugt. Die mittlere Teilchengröße liegt zwischen 1 und 6 µm, insbesondere 2 und 5 µm. Die wirksame Menge an Antiblockmittel liegt im Bereich von 0,1 bis 5 Gew.-%, vorzugsweise 0,5 bis 3 Gew.-%, insbesondere 0,8 bis 2 Gew.-%.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-(C₁-C₄)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-% in der Basisschicht. Ein insbesondere geeignete aliphatische Säureamide sind Erucasäureamid und Stearylamid. Der Zusatz von Polydimethylsiloxanen ist im Bereich von 0,02 bis 2,0 Gew.-% bevorzugt, insbesondere Polydimethylsiloxane mit einer Viskosität von 5 000 bis 1 000 000 mm²/s.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische und phosphitische Stabilisatoren. Phenolische Stabilisatoren mit einer Molmasse von mehr als 500 g/mol werden bevorzugt, insbesondere Pentaerythrityl-Tetrakis-3-(3,5-di-Tertiärbutyl-4-Hydroxy-phenyl)-Propionat oder 1,3,5-Trimethyl-2,4,6-tris(3,5-di-Tertiärbutyl-4-Hydroxybenzyl)benzol. Dabei werden phenolische Stabilisatoren allein in einer Menge von 0,1 bis 0,6 Gew.-%, insbesondere 0,1 bis 0,3 Gew.-%, phenolische und phosphitische Stabilisatoren im Verhältnis 1 : 4 bis 2 : 1 und in einer Gesamtmenge von 0,1 bis 0,4 Gew.-%, insbesondere 0,1 bis 0,25 Gew.-% eingesetzt.

Neutralisationsmittel sind vorzugsweise Dihydrotalcit, Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m²/g.

Die Gesamtdicke der erfindungsgemäßen Folie kann innerhalb weiter Grenzen variieren und richtet sich nach dem beabsichtigten Einsatz. Sie beträgt vorzugsweise 4 bis 100 µm, insbesondere 5 bis 800 µm, vorzugsweise 6 bis 60 µm.

In einer möglichen Ausführungsform wird die Oberfläche der Deckschich/en oder die Oberfläche der Kraftschicht/en Corona-, Plasma- oder Flammbehandelt.

Die Erfindung betrifft weiterhin ein Verfahren zur Herstellung der erfindungsgemäßen Folie nach dem an sich bekannten Coextrusionsverfahren. Im Rahmen dieses Verfahrens werden die den einzelnen Schichten der Folie entsprechenden Schmelzen durch eine Flachdüse coextrudiert, die so erhaltene Folie zur Verfestigung auf einer oder mehreren Walze/n abgezogen, die Folie anschließend gestreckt (orientiert), die gestreckte Folie thermofixiert und gegebenenfalls an der zur Behandlung vorgesehenen Oberflächenschicht plasma- corona- oder flammbehandelt.

Eine biaxiale Streckung (Orientierung) wird sequentiell oder simultan durchgeführt. Die sequentielle Streckung wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist. Die weitere Beschreibung der Folienherstellung erfolgt am Beispiel einer Flachfolienextrusion mit anschließender sequentieller Streckung.

Zunächst wird wie beim Extrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt.

Nach dem Stand der Technik werden mehrschichtige Folien üblicherweise nach dem sogenanntem Freirand-Prinzip extrudiert, d.h. die Breite der Deckschichten ist gegenüber der Breite der Basisschicht reduziert, wodurch die beiden Randbereiche der Folienbahn frei von Deckschichtmaterial bleiben Nach der Freirand-Methode greifen die Haltekluppen des Querstreckrahmens die Folie an diesem Freirand und übertragen somit die Streckkräfte unmittelbar auf die Basisschicht einer Folie. Es wurde gefunden, daß auf diese Weise keine coextrudierte und biaxial verstreckte Folie mit einer LCP-Schicht hergestellt werden kann. Mit dieser üblichen Freirandmethode zerstören die unmittelbar einwirkenden Streckkräfte die LCP-Schicht durch Aufriße.

Es ist für das erfindungsgemäße Verfahren wesentlich, daß die Kraftschicht im Gegensatz zu der üblichen Stendermethode mit der gleichen Breite extrudiert wird, wie die darunter befindlichen Haftvermittlerschichten und die LCP-Schicht. Im Gegensatz zu den herkömmlichen Stenderverfahren nach dem Stand der Technik wird bei dem erfindungsgemäßen Verfahren auf den Freirand verzichtet. Dies ist wesentlich, damit die Kluppen bei der Querstreckung die Kraftschicht und die Haftvermittlerschichten und die LCP-Schicht gleichzeitig ergreifen. Nur durch diese Maßnahme wird eine Querverstreckung der LCP-Schicht über den Stenderprozess ermöglicht. Es hat sich gezeigt, daß die gleichmäßige Einwirkung der Kluppenkräfte und somit die Übertragung der Streckkräfte über die Kraftschicht durch die Haftschicht auf die LCP-Basisschicht möglich ist und dadurch die LCP-Schicht über die Kraftschicht mitverstreckt werden kann.

Überraschenderweise spielen auch die Extrusionsbedingungen eine wichtige Rolle bei der Herstellung der Folie. Es wurde zusätzlich gefunden, daß die Haftung der einzelnen Schichten aufeinander, insbesondere die Haftung der LCP-Schicht zur Haftschicht, von der Verweilzeit der aufeinandergelegten Schmelzen abhängt. Es trägt zu einer guten Haftung bei, wenn die einzelnen Schichten der coextrudierten Folie für einen gewissen Zeitraum im geschmolzenen Zustand verweilen, so daß eine intensivere Bindung der Oberflächen von Haft- und LCP-Schicht erreicht werden kann. Daher ist es für das erfindungsgemäße Verfahren wesentlich, daß die Verweilzeit der coextrudierten Schichten in der Düse mindesten 6 sec beträgt und damit deutlich höher ist als die Verweilzeit der PP-Schmelzen bei der Coextrusion einer konventionellen, mehrschichtigen oPP-Folie. Je länger diese Verweilzeit der aufeinanderliegenden Schmelzen in der Düse ausgedehnt wird, umso besser ist die Haftung der Schichten. Vorzugsweise beträgt die Verweilzeit 8 bis 180 sec, insbesondere 8 bis 100 sec. Es konnte beoachtet werden, daß bei zu kurzen Verweilzeiten der Haftschicht und der LCP-Schicht aufeinander in der Düse mit der anschließenden biaxialen Orientierung des coextrudierten Verbundes zu Delaminierungen insbesondere während Querverstreckung kommt. Die Haftung der LCP-Schicht zu den übrigen Schichten ist nicht mehr ausreichend. Die LCP Schicht wird nicht mit orientiert und es kommt zu Rissen in dieser LCP Schicht

Die Verweilzeit der Schmelzen in der Düse kann grundsätzlich über die Düsengeometrie und den Extruderausstoß gesteuert werden. Eine in Hauptfließrichtung (quer zur Düsenlippe) verlängerte Düse verlängert die Verweilzeit. Ein geringerer Extruderausstoß verlängert in Verbindung mit den entsprechend angepaßten Abzugs- und. Laufgeschwindigkeiten die Verweilzeit ebenfalls.

Selbstverständlich ist es erforderlich die Düse wie üblich zu beheizen, damit die aufeinanderliegenden Schmelzen auf der notwendigen Temperatur gehalten werden. Üblicherweise beträgt die Düsentemperatur 200 bis 300°C.

Die auf diese Weise geführte coextrudierte Schmelze wird auf einer oder mehreren Abzugswalzen bei einer Temperatur von 10 bis 100°C, vorzugsweise 10 bis 50°C, abgezogen, wobei sie sich zu einer mehrschichtige Vorfolie abkühlt und sich verfestigt.

Die so erhaltene Vorfolie wird dann längs und quer zur Extrusionsrichtung gestreckt, was zu einer weiteren Orientierung der Molekülketten in der LCP-Schicht führt. Das Längsstrecken wird man vorzugsweise bei einer Temperatur von 120 bis 165 °C, vorzugsweise 140 bis 160°C zweckmäßigerweise mit Hilfe zweier entsprechend dem angestrebten Streckverhältnis verschieden schnellaufender Walzen durchführen. Die Längsstreckverhältnisse liegen im Bereich von 3 bis 8 vorzugsweise 4 bis 6.

Das Querstrecken (ohne Freirand) wird vorzugsweise bei einer Temperatur von 130 bis 180 °C, vorzugsweise 140 bis 180°C mit Hilfe eines entsprechenden Kluppenrahmens durchgeführt. Wie bereits erwähnt ist es dabei wesentlich daß die Kraft-, Haft- und LCP-Schichten gemeinsam und gleichzeitig von den Kluppen des Questreckrahmens gefaßt werden. Die Querstreckverhältnisse liegen im Bereich von 3 bis 8, vorzugsweise 5 bis 7.

An die Streckung der Folie schließt sich gegebenenfalls eine Thermofixierung (Wärmebehandlung) an, wobei die Folie etwa 0,1 bis 10 s lang bei einer Temperatur von 120 bis 160 °C gehalten wird. Anschließend wird die Folie in üblicher Weise mit einer Aufwickeleinrichtung aufgewickelt.

Bevorzugt wird/werden nach der biaxialen Streckung eine oder beide Oberfläche/n der Folie nach einer der bekannten Methoden plasma-, corona- oder flammbehandelt. Die Behandlungsintensität liegt im allgemeinen im Bereich von 35 bis 50 mN/m, vorzugsweise 37 bis 45 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Zur Charakterisierung der Rohstoffe und der Folien wurden die folgenden Meßmethoden benutzt:

### Schmelzflußindex

Der Schmelzflußindex wurde nach DIN 53 735 bei 21,6 N Belastung und 230 °C gemessen.

### Schmelzpunkt

DSC-Messung, Maximum der Schmelzkurve, Aufheizgeschwindigkeit 20 °C/min.

### Trübung

Die Trübung der Folie wurde nach ASTM-D 1003-52 gemessen.

### Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportio-nale elektrische Größe angezeigt. Der Meßwert ist dimensionslos und muß mit dem Einstrahlwinkel angegeben werden.

### Oberflächenspannung

Die Oberflächenspannung wurde mittels der sogenannten Tintenmethode (DIN 53 364) bestimmt.

### Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

### Beispiel 1

Bei einer Düsentemperatur von 230°C wurden eine Basisschicht aus LCP mit beidseitigen Haftvermittlerschichten und darauf angebrachten Kraftschichten miteinander coextrudiert. Dabei wurden alle Schichten mit der gleichen Breite extrudiert (kein Freirand). Die Verweildauer der Schmelzen in der Düse betrug ca. 80 sec. Anschließend wurden die Schmelzen auf einer Abzugswalze abgezogen und stufenweise Orientierung in Längs- und Querrichtung orientiert. Die Dicke der Kraftschichten betrug jeweils ca. 8µm, die Dicke der Haftschichten jeweils ca. 0,8 µm und die Dicke der LCP Schicht war 5 µm entsprechend einer Gesamtfoliendicke von ca 23 µm.

### Basisschicht:

| | |
|---|---|
| 100 Gew.-% | LCP (Vectra LCP, aromatischer Copolyester) mit einem Glasübergangspunkt T_{g} von 105°C und einem Schmelzflußindex von 21g/10min [bei 190°C,21,6N] |

### Haftvermittlerschichten

| | |
|---|---|
| 100 Gew.-% | Terpolymer aus Ethylen, Ethylacrylester und Glycedyl-Methacrylat mit einem Comonomergehalt von 29% - 32% und einem Schmelzflußindex von 6,0 g/10min bis 8g/10min [bei 190°C, 21,6N]. |

### Kraftschichten

| | |
|---|---|
| 100 Gew.-% | isotaktisches Propylenhomopolymer mit einem Schmelzpunkt von 162°C und einer Kristallinität von 60% und einem Schmelzflußindex von 6,0g/10min |

Die Herstellungsbedingungen in den einzelnen Verfahrensschritten waren:

| | | | |
|---|---|---|---|
| Extrusion: | Temperaturen | Basisschicht: | 220 °C |
| | Haftvermittlerschicht: | | 180°C |
| | | Kraftschicht: | 240 °C |
| | Temperatur der Abzugswalze: | | 20 °C |
| Längsstreckung: | Temperatur: | | 160-165 °C |
| | Längsstreckverhältnis: | | 4,0-5,0 |
| Querstreckung: | Temperatur: | | 170°C |
| | Querstreckverhältnis: | | 6,8 |
| Fixierung: | Temperatur: | | 165°C |
| | Konvergenz: | | 10 % |

Bei dem Querstreckverhältnis λ_{Q} = 6,8 handelt es sich um einen Effektivwert. Dieser Effektivwert berechnet sich aus der Endfolienbreite B, reduziert um die zweifache Säumstreifenbreite b, dividiert durch die Breite der längsgestreckten Folie C, ebenfalls um die zweifache Säumstreifenbreite b reduziert.

### Beispiel 2

Es wurde eine Folie wie in Beispiel 1 beschrieben hergestellt. Im Unterschied zu Beispiel 1 wurde eine Haftvermittlerschicht aus einem Copolymer aus Ethylen und Glycidyl-Methacrylat mit einem Comonomergehalt von 8% und einem Schmelzflußindex von 5,0 g/10min bis 8g/10min [bei 190°C, 21,6N] eingesetzt.

### Beispiel 3

Es wurde eine Folie wie in Beispiel 1 beschrieben hergestellt. Im Unterschied zu Beispiel 1 wurde eine Haftvermittlerschicht aus einem Terpolymer aus Ethylen, Ethylacrylester und Maleinsäureanhydrid mit einem Comonomergehalt von 32% und einem Schmelzflußindex von 7,0 g/10min bis 8g/10min [bei 190°C, 21,6N]eingesetzt.

Alle Folienstrukturen nach den Beispielen 1 bis 3 ließen sich mit den angegebenen Streckverhältnissen verstreckten. Es konnte eine transparente verstreckte Folie mit zentraler LCP Schicht erhalten werden, welche sehr gute Barriereeigenschaften auf Grund der LCP Schicht aufwies. Die LCP Schicht wurde zusammen mit den anderen Schichten orientiert, ohne daß dabei Risse in dieser LCP Schicht auftraten. Es kam weder bei der Extrusion noch während oder nach der Verstreckung zu Delaminierungen der einzelnen Schichten.

### Vergleichsbeispiel 1

Es wurde eine fünfschichtige Folie, wie in Beispiel 1 beschrieben extrudiert, jedoch betrugt durch einen erhöhten Extruderausstoß die Verweilzeit der coextrudierten Schmelzen in der Düse jetzt nur 3 sec. Nach dem Abkühlen der Folie auf den Abzugswalzen delaminierte der Verbund, so daß keine anschließende Verstreckung möglich war.

### Vergleichsbeispiel 2

Es wurde eine fünfschichtige Folie, wie in Beispiel 1 beschrieben extrudiert, jedoch wurden wie bei der oPP Herstellung üblich die äußeren Schichten mit einer gegenüber der LCP-Basisschicht reduzierten Breite extrudiert (Freirandextrusion). Die Folie ließ sich Abziehen und Längsverstrecken. Jedoch kam es bei der Querstreckung zu Rissen in der LCP Schicht und eine Querstreckung war nicht mehr möglich.

## Patentansprüche

1. Verfahren zur Herstellung einer mehrschichtigen, biaxial orientierten coextrudierten Polyolefinfolie, welche mindestens fünf Schichten umfaßt, wobei die den einzelnen Schichten der Folie entsprechenden Schmelzen durch eine Flachdüse coextrudiert, die so erhaltene mehrschichtige Folie zur Verfestigung auf einer oder mehreren Walze/n abgezogen und abgekühlt wird und die Folie anschließend gestreckt (orientiert), die gestreckte Folie thermofixiert und aufgewickelt wird, **dadurch gekennzeichnet, daß** die Folie eine zentrale Schicht aus einem flüssigkristallinen Polymeren (LCP) und beidseitig auf jeder Oberfläche der LCP-Schicht je eine Haftvermittlerschicht und auf den Oberflächen der jeweiligen Haftvermittlerschicht eine Kraftschicht aus einem teilkristallinen thermoplastischen Polymeren aufweist, wobei die Haftvermittlerschicht aus einem modifizierten Co- und/oder Terpolymeren aufgebaut ist, welches aus Olefin und ungesättigter Carbonsäure oder deren Estern aufgebaut ist und die LCP-Schicht der biaxial verstreckten Folie eine Dicke von höchstens 10 µm aufweist und die den einzelnen Schichten der Folien entsprechenden Schmelzen vor der Abkühlung für eine Dauer von mindestens 6 sec in geschmolzenem Zustand aufeinanderliegen.

2. Verfahren nach Anspruch 1, **dadurch gekennzeichnet, daß** die LCP-Schicht und die Haftvermittlerschichten und die Kraftschichten mit der gleichen Breite extrudiert werden und die Kluppen bei der Querstreckung alle fünf Schichten gemeinsam ergreifen.

3. Verfahren nach Anspruch 1 oder 2, **dadurch gekennzeichnet, daß** die Orientierung in Längsrichtung mit einem Längsstreckverhältnis von 3:1 bis 8:1 und in Querrichtung mit einem Querstreckverhältnis von 3:1 bis 8:1 erfolgt.

4. Verfahren nach einem der Ansprüche 1 bis 3, **dadurch gekennzeichnet, daß** das Terpolymere der Haftvermittlerschicht aus drei verschiedenen Monomeren (a), (b) und (c) besteht, wobei (a) ein Olefin und (b) eine ungesättigte Carbonsäuren oder deren Ester und (c) ein von (b) verschiedener Carbonsäureester oder ein Carbonsäureanhydrid ist.

5. Verfahren nach einem der Ansprüche 1 bis 4, **dadurch gekennzeichnet daß** das Copolymere der Haftvermittlerschicht aus einem Olefin und einer ungesättigte Carbonsäure oder deren Estern besteht

6. Verfahren nach einem der Ansprüche 1 bis 5, **dadurch gekennzeichnet, daß** die Haftvermittlerschicht eine Dicke von 0,4 bis 4 µm aufweist.

7. Verfahren nach einem der Ansprüche 1 bis 6, **dadurch gekennzeichnet, daß** das teilkristalline Polymere der Kraftschicht ein isotaktische Propylenhomopolymer ist.

8. Verfahren nach einem der Ansprüche 1 bis 7, **dadurch gekennzeichnet, daß** die Kraftschicht Propylenhomopolymer und vakuoleninitierende Füllstoffe und/oder Pigmente enthält und die Kraftschicht opak ist.

9. Verfahren nach einem der Ansprüche 1 bis 8, **dadurch gekennzeichnet, daß** die Kraftschicht 5 bis 15 µm dick ist

10. Verfahren nach einem der Ansprüche 1 bis 9, **dadurch gekennzeichnet, daß** das die mehrschichtige Folie zusätzlich mindestens eine Deckschichten auf der Oberfläche der Kraftschicht aufweist und diese Deckschicht siegelfähig ist.

## Claims

1. Process for the production of a multi-layer, biaxially oriented coextruded polyolefin film comprising at least five layers, the melts corresponding to the individual layers of the film being coextruded through a flat die, the multi-layer film thus obtained being pulled off and cooled on one or several roller(s)and the film being subsequently stretched (oriented), the stretched film being heat set and wound up, **characterised in that** the film exhibits a central layer of a liquid crystalline polymer (LCP) and, on both sides of each surface of the LCP layer, a bonding agent layer and on the surfaces of the bonding agent layer a resistant layer of a partially crystalline thermoplastic polymer, the bonding agent layer consisting of a modified copolymer and/or terpolymer which consists of olefin and unsaturated carboxylic acid or its esters and the LCP layer of the biaxially stretched film having a thickness of maximum 10 µm and the melts corresponding to the individual layers of the films being placed on top of each other in the molten state before cooling for a duration of at least 6 secs.

2. Process according to claim 1 **characterised in that** the LCP layer and the bonding agent layers and the resistant layers are extruded in the same width and the tenters jointly grip all five layers during transverse stretching.

3. Process according to claim 1 or 2, **characterised in that** the orientation in longitudinal direction takes place with a longitudinal stretching ratio of 3:1 to 8:1 and in the transverse direction with a transverse stretching ratio of 3:1 to 8:1.

4. Process according to one of claims 1 to 3 **characterised in that** the terpolymer of the bonding agent layer consists of three different monomers (a), (b) and (c), (a) being an olefin and (b) an unsaturated carboxylic acid or its esters and (c) a carboxylic acid ester or a carboxylic anhydride different from (b).

5. Process according to one of claims 1 to 4 **characterised in that** the copolymer of the bonding agent layer consists of an olefin and an unsaturated carboxylic acid or its esters.

6. Process according to one of claims 1 to 5 **characterised in that** the bonding agent layer has a thickness of 0.4 to 4 µm.

7. Process according to one of claims 1 to 6 **characterised in that** the partially crystalline polymer of the resistant layer is an isotactic propylene homopolymer.

8. Process according to one of claims 1 to 7 **characterised in that** the resistant layer contains propylene homopolymer and vacuole initiating fillers and/or pigments and the resistant layer is opaque.

9. Process according to one of claims 1 to 8 **characterised in that** the resistant layer is 5 to 15 µm thick.

10. Process according to one of claims 1 to 9 **characterised in that** the multi-layer film additionally exhibits at least one covering layer on the surface of the resistant layer and this covering layer is sealable.

## Revendications

1. Procédé de fabrication d'un film de polyoléfine coextrudé multicouche, orienté biaxialement et comprenant au moins cinq couches, les coulées correspondant aux couches distinctes du film étant coextrudées par une buse plate, le film multicouche ainsi obtenu étant extrait sur un ou plusieurs des cylindres pour solidification et refroidi et le film étant ensuite étiré (orienté), le film étiré étant thermofixé et enroulé, **caractérisé en ce que** le film présente une couche centrale en polymère à cristaux liquides (LCP) et des deux côtés, sur chaque surface de la couche de LCP, chaque fois une couche promotrice d'adhérence et sur les surfaces de la couche promotrice d'adhérence respective une couche de résistance en polymère thermoplastique partiellement cristallin, la couche promotrice d'adhérence étant constituée d' un co- et/ou terpolymère modifié qui est constitué d'oléfine et d'acide carboxylique insaturé ou leurs esters et que la couche de LCP du film étiré biaxialement a une épaisseur de 10 µm au plus et les coulées correspondant aux couches distinctes des films sont superposées avant le refroidissement pendant une durée d'au moins 6 secondes à l'état fondu.

2. Procédé selon la revendication 1, **caractérisé en ce que** la couche de LCP et les couches promotrices d'adhérence et les couches de résistance sont extrudées avec la même largeur et que les pinces, lors de l'étirage transversal, saisissent les cinq couches ensemble.

3. Procédé selon la revendication 1 ou 2, **caractérisé en ce que** l'orientation dans le sens longitudinal se fait avec un rapport d'étirage longitudinal de 3: 1 à 8: 1 et dans le sens transversal avec un rapport d'étirage transversal de 3: 1 à 8: 1.

4. Procédé selon une des revendications 1 à 3, **caractérisé en ce que** le terpolymère de la couche promotrice d'adhérence est composé de trois monomères différents (a), (b) et (c), (a) étant une oléfine et (b) un acide carboxylique insaturé ou son ester et (c) un ester d'acide carboxylique différent de (b) ou un anhydride d'acide carboxylique.

5. Procédé selon une des revendications 1 à 4, **caractérisé en ce que** le copolymère de la couche promotrice d'adhérence est composé d'une oléfine et d'un acide carboxylique insaturé ou ses esters.

6. Procédé selon une des revendications 1 à 5, **caractérisé en ce que** la couche promotrice d'adhérence a une épaisseur de 0,4 à 4 µm.

7. Procédé selon une des revendications 1 à 6, **caractérisé en ce que** le polymère partiellement cristallin de la couche de résistance est un homopolymère de propylène isotactique.

8. Procédé selon une des revendications 1 à 7, **caractérisé en ce que** la couche de résistance contient de l'homopolymère de propylène et des matières de charge à l'origine de vacuoles et/ou des pigments et que la couche de résistance est opaque.

9. Procédé selon une des revendications 1 à 8, **caractérisé en ce que** la couche de résistance a une épaisseur de 5 à 15 µm.

10. Procédé selon une des revendications 1 à 9, **caractérisé en ce que** le film multicouche présente en outre au moins une couche de recouvrement sur la surface de la couche de résistance et que cette couche de recouvrement peut être scellée.
